# EUROPEAN PATENT APPLICATION

(11) **EP 1 090 576 A2**
(43) Date of publication of application: **11.04.2001**
(21) Application number: 00830545.0
(22) Date of filing: 31.07.2000
(51) Int. Cl.: A47J 45/06

(54) **Analogue temperature indicator for cooking receptacles**

(30) Priority: 05.10.1999 IT BS990091 U
(71) Applicant: Guatta Andrea S.p.A., 25077 Roe' Volciano-Brescia (IT)
(72) Inventor: Guatta, Andrea, 25077 Roe' Volciano (Brescia) (IT)
(74) Representative: Manzoni, Alessandro

(57) **Abstract**

This concerns an analogue temperature indicator that can be applied to the lids and handles of receptacles for cooking, such as pans and similar. It consists of a reflecting surface (17) located below a reading index and which reflects a graded scale or quadrant (16) placed above said index. In this way, the graded scale or quadrant is mirrored to give a double reference of the temperature reading, while using a single graded scale or quadrant.

## Description

This practical invention refers to an analogue temperature indicator, or thermometer, which can be applied to lids, knobs or handles of receptacles, especially pans and similar, for household cooking.

Analogue thermometers are already inserted in pan knobs or lid handles to measure the temperature on an appropriate graded scale.

These thermometers usually consist of a bi-metallic element, attached to an indicator hand which is positioned above a quadrant or graded scale.

Expanding with the heat, the bi-metallic element causes the indicator hand to rotate above the scale, showing visually the temperature reached on the quadrant or graded scale.

These graded scales or quadrants are often divided into different coloured areas, or into many numbers, which show the changing conditions and temperatures. These zones are often numerous and separated only by drawn lines or dots.

There also exist thermometers with two quadrants or graded scales, placed above and below the indicator element, to add further descriptions or indications.

The aim of this invention is to supply a temperature indicator for the scope or use mentioned above, in which the single strip, graded or divided into different coloured sections, is made doubly visible, with two reading areas, one above the indicator element and one below.

The aim is achieved, according to the invention, by inserting a reflecting surface into the thermometer, which accurately reflects the scale or quadrant placed above. The same effect can be obtained by choosing to make the lower surface of the thermometer reflecting (thermometer bulb), beneath said scale or quadrant.

Then, when the indicator moves as a result of the heat, the user will immediately have a visibility that is doubled and better from every angle, since the index can be seen from both above and below, as well as sideways at the precise point in which it is located.

The usefulness of this invention lies in having doubled the area of the quadrant or graded area on which the attention is focussed, creating a three-dimensional effect of the scale, which makes it much easier to view and promptly focalise the index situation, while, previously, the same effect was obtained by inserting two identical quadrants or scales, which had to match perfectly and with all the problems of centring the first and second quadrant so that they could be used effectively.

The advantages of this model of the thermometer can be summarised briefly as:
- clarity of reading
- a system of reflection/mirrors that creates a visual effect without any other adjustment; all other systems must inevitably rely on centring and regulation of the disks;
- simple to assemble pieces;
- consequent saving in terms of cost.

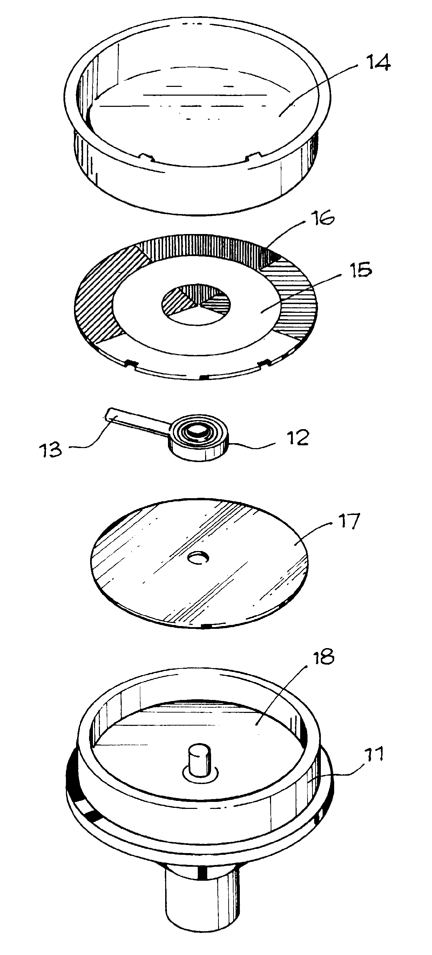

The enclosed drawing shows, in the form of an exploded diagram, the components of the temperature indicator in question. This consists of a thermometer bulb 11 with a relative bi-metallic element 12, complete with index 13 and overlaid with a glass piece 14, which defines a window for viewing the index. Just below the window 14, but above the bi-metallic element with the index, there is a transparent disk 15 which carries a graded scale or quadrant 16 for reading the temperature. Beneath the element with the index 13, there is a reflecting disk 17 which functions as a mirror and in which the graded scale or quadrant above is mirrored and seen by reflection. This graded scale is, therefore, mirrored in order to indicate and visualise the temperature in the same way from both above and below the index, with the result and the advantages mentioned earlier.

A similar result can be obtained with a reflecting surface located beneath the index 13, but coinciding with the surface 18 of the thermometer bulb, which is also made reflecting, without having recourse to an additional disk.

## Claims

1. Analogue temperature indicator for applying to lids, knobs and handles of cooking receptacles, such as pans and similar, consisting of a thermometer bulb (11) furnished with a bi-metallic element (12), complete with index (13), and covered by a glass piece (14) which functions as a viewing window for the index, and where, between said glass piece and said reading index, there is a graded scale or quadrant (16) for indicating and reading the temperature, characterised by a reflecting surface (17) which mirrors said graded scale or quadrant (16), duplicating it to provide a double temperature reading, using a single graded scale or quadrant.

2. Temperature indicator according to claim 1, in which the graded scale or quadrant is above the reading index (13) and the reflecting surface (17) is below said index, the whole being visible through the viewing window.

3. Temperature indicator according to claims 1 and 2, in which the reflecting surface consists of a mirror disk placed between the thermometer bulb (11) and the bi-metallic element with the index (12, 13).

4. Temperature indicator according to claims 1 and 2, in which the reflecting surface coincides with the surface (18) of the thermometer bulb beneath the bi-metallic element with the index (12, 13), said surface forming a mirror.
